# EUROPÄISCHE PATENTSCHRIFT

(11) **EP 2 338 715 B1**
(45) Veröffentlichungstag und Bekanntmachung des Hinweises auf die Patenterteilung: **06.06.2012**
(21) Anmeldenummer: 10014423.7
(22) Anmeldetag: 09.11.2010
(51) Int. Cl.: B60J 5/06, E05D 15/10

(54) **Schiebetüre für ein Fahrzeug**
Sliding door for a vehicle
Porte coulissante pour véhicule

(30) Priorität: 17.12.2009 DE 102009058583
(43) Veröffentlichungstag der Anmeldung: 29.06.2011
(73) Patentinhaber: DURA Automotive Body and Glass Systems GmbH, 58840 Plettenberg (DE)
(72) Erfinder: Heuel, Gerhard, 57462 Olpe (DE); Krehmke, Michael, 58840 Plettenberg (DE); Rottmann, Ralf, 57489 Drolshagen (DE)
(74) Vertreter: Zinnecker, Armin

(56) Entgegenhaltungen:
- DE-B3-102008 016 650
- FR-A1- 2 814 491

## Beschreibung

Die Erfindung betrifft eine Schiebetüre für ein Fahrzeug, insbesondere für ein Kraftfahrzeug.

Die Schiebetüre umfaßt eine Führungsschiene, einen Gleitschlitten und einen Führungsstift. Der Gleitschlitten ist an der Führungsschiene längsverschieblich gelagert und durch ein Mehrgelenk mit der Fahrzeugkarosserie verbindbar. Der Führungsstift ist in einer an der Schiebetüre vorgesehenen Führung geführt.

Eine derartige Schiebetüre ist aus der DE 10 2008 016 650 B3 bekannt. Bei dieser Schiebetüre umfaßt das Mehrgelenk einen Scharnierbügel, der an dem Gleitschlitten und an einem Karosserieflansch drehbar gelagert ist, und einen Steuerhebel, der an dem Gleitschlitten und an einem oder dem Karosserieflansch drehbar gelagert ist. Die vorbekannte Schiebetüre umfaßt ferner einen ersten Zwischenhebel, der an dem Steuerhebel drehbar gelagert ist, und einen zweiten Zwischenhebel, der an dem ersten Zwischenhebel und an dem Gleitschlitten drehbar gelagert ist. Die Schiebetüre ist an dem dem Mehrgelenk abgewandten Ende durch eine Zentrierung drehbar und längsverschieblich gelagert. Sie ist dort arretierbar. Der Steuerhebel weist eine Verlängerung auf, an dem der erste Zwischenhebel drehbar gelagert ist. An dem Verbindungsgelenk des ersten Zwischenhebels und des zweiten Zwischenhebels ist ein Führungsstift vorgesehen, der in einer an der Schiebetüre vorgesehenen Führung geführt ist. Die Führung verläuft relativ zur Führungsschiene geneigt. Hierbei verläuft die Führung in Richtung von dem Scharnierbügel weg nach außen geneigt.

Eine andere Schiebetüre der eingangs angegebenen Art ist in der EP 2 008 846 A2 beschrieben. Hier ist eine Antriebstange vorhanden, die an dem Steuerhebel drehbar gelagert ist. Die Schiebetüre ist an dem dem Mehrgelenk abgewandten Ende durch eine Zentrierung drehbar und längsverschieblich gelagert. Sie ist dort arretierbar. Die Antriebstange ist an der Führungsschiene drehbar gelagert. Der Steuerhebel weist einen Hebelarm auf, an dem die Antriebstange drehbar gelagert ist. An einem Zwischenhebel, der an dem Gleitschlitten drehbar gelagert ist, ist ein Führungsstift vorgesehen, der in einer an der Schiebetüre vorgesehenen Führung geführt ist.

Aus der prioritätsälteren, nicht vorveröffentlichten DE 10 2008 026 137 A1 ist eine weitere Schiebetüre der eingangs angegebenen Art bekannt. Hier weist der Steuerhebel einen Hebelarm auf, an dem ein Führungsstift vorgesehen ist, der in einer an der Schiebetüre vorgesehenen Führung geführt ist. Die Führung verläuft vorzugsweise in Richtung von dem Scharnierbügel weg nach außen geneigt.

Bei den vorbekannten Lösungen ist der Führungsstift im allgemeinen mit einem gewissen Spiel in der Führung geführt. Wenn man die Führung spielfrei herstellen würde, könnte die Reibung des Führungsstifts zu groß werden, so daß die Öffnungs- und Schließbewegung der Schiebetüre nicht hinreichend leichtgängig wäre. Durch das Spiel des Führungsstifts in der Führung können die Nachteile eines Verschleißes und/oder eines verminderten Bedienungskomforts entstehen.

Aufgabe der Erfindung ist es, eine verbesserte Schiebetüre der eingangs angegebenen Art vorzuschlagen.

Erfindungsgemäß wird diese Aufgabe durch die Merkmale des Anspruchs 1 gelöst. Die Führung umfaßt eine erste Führungsbahn und eine zweite Führungsbahn. Die zweite Führungsbahn ist gegenüber der ersten Führungsbahn elastisch vorgespannt. Beim Öffnen der Schiebetüre stützt sich der Führungsstift an einer der beiden Führungsbahnen ab, insbesondere an der ersten Führungsbahn. Diese Führungsbahn kann innen liegen. Beim Schließen der Schiebetüre stützt sich der Führungsstift an der anderen Führungsbahn ab, insbesondere an der zweiten Führungsbahn. Die zweite Führungsbahn kann außen liegen. Dadurch, daß die erste Führungsbahn und die zweite Führungsbahn voneinander getrennt und gegeneinander elastisch vorgespannt sind, kann die Führung insgesamt spielfrei ausgeführt werden.

Vorteilhafte Weiterbildungen sind in den Unteransprüchen beschrieben.

Die zweite Führungsbahn ist vorzugsweise durch eine Feder vorgespannt. Bei der Feder kann es sich um eine Zugfeder und/oder um eine Druckfeder handeln.

Vorteilhaft ist es, wenn die zweite Führungsbahn gegenüber der ersten Führungsbahn schwenkbar gelagert ist.

Nach einer weiteren vorteilhaften Weiterbildung sind die erste Führungsbahn und die zweite Führungsbahn übereinander angeordnet.

An dem Führungsstift können zwei Rollen vorgesehen sein. Die Rollen sind in den Führungsbahnen geführt. Vorteilhaft ist es, wenn die Rollen übereinander angeordnet sind.

Die Rollen sind vorzugsweise ballig ausgestaltet. Es ist allerdings auch möglich, die Rollen zylindrisch oder mit einer anderen Form auszuführen.

Die Erfindung betrifft ferner ein Fahrzeug, insbesondere ein Kraftfahrzeug, das durch eine oder mehrere erfindungsgemäße Schiebetüren gekennzeichnet ist.

Ein Ausführungsbeispiel der Erfindung wird nachstehend anhand der beigefügten Zeichnung im einzelnen erläutert. In der Zeichnung zeigt
- Fig. 1: eine Schiebetüre für ein Kraftfahrzeug nach der prioritätsälteren, nicht vorveröffentlichten DE 10 2008 026 137 A1 in der geschlossenen Stellung in einer schematischen An- sicht von oben,
- Fig. 2: die Schiebetüre gemäß Fig. 1 in einer teilweise geöffneten Stellung in einer der Fig. 1 entsprechenden schematischen Ansicht von oben,
- Fig. 3: die Schiebetüre gemäß Fig. 1 und 2 in der vollständig geöffneten Stellung in einer den Fig. 1 und 2 entsprechenden schematischen Ansicht von oben,
- Fig. 4: eine erfindungsgemäße Führung für die Schiebetüre nach Fig. 1 bis 3 in einer Ansicht von oben und
- Fig. 5: einen Schnitt längs der Linie A-A in Fig. 4.

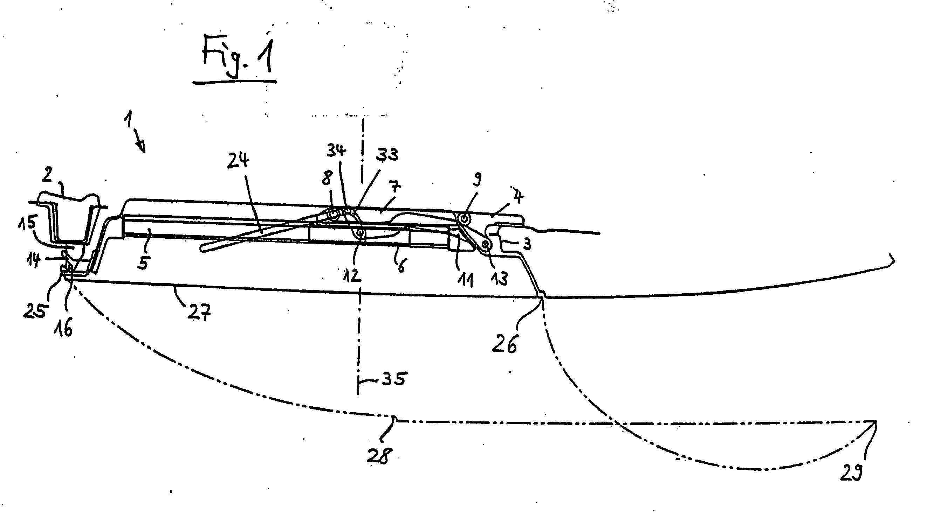

Fig. 1, 2 und 3 zeigen die Schiebetüre 1 nach einem Ausführungsbeispiel der prioritätsalteren, nicht vorveröffentlichten DE 10 2008 026 137 A1. Die Schiebetüre 1 ist die linke hintere Türe eines Kraftfahrzeugs. Sie befindet sich in der Öffnung der Karosserie zwischen der B-Säule 2 und einem hinteren Karosserieteil 3, in dessen Bereich ein Karosserieflansch 4 mit der Karosserie verbunden ist. Bei dem hinteren Karosserieteil 3 kann es sich um die C-Säule oder um die A-Säule handeln.

Die Schiebetüre 1 weist an ihrer Innenseite eine Führungsschiene 5 auf. An der Führungsschiene 5 ist ein Gleitschlitten 6 längsverschieblich gelagert.

Die Schiebetüre 1 weist ferner einen Scharnierbügel 7 und einen Steuerhebel 11 auf. Der Scharnierbügel 7 ist an dem Gleitschlitten 6 um ein Gelenk 8 und an dem Karosserieflansch 4 um ein Gelenk 9 drehbar gelagert. Der Steuerhebel 11 ist an dem Gleitschlitten 6 um ein Gelenk 12 und an dem Karosserieflansch 4 um ein Gelenk 13 drehbar gelagert.

An dem Gleitschlitten 6 ist eine Gelenkplatte 21 befestigt, die die Gelenke 8 und 12 trägt. Der Scharnierbügel 7, der Steuerhebel 11, der Gleitschlitten 6 bzw. die Gelenkplatte 21 und der Karosserieflansch 4 bilden mit den Gelenken 8, 9, 12 und 13 ein Mehrgelenk.

An dem dem Scharnierbügel 7 gegenüberliegenden Ende der Schiebetüre 1 ist an der Schiebetüre 1 eine U-förmige Aufnahme 14 vorgesehen, die geneigt zur Fahrzeug-Längsrichtung verläuft, nämlich in Fahrzeugrichtung nach vorne nach innen. Sie ist an ihrem dem Scharnierbügel 7 abgewandten, im Ausführungsbeispiel also vorderen inneren Ende offen. An einem Karosserieflansch 15, der an der B-Säule 2 befestigt ist, ist ein Scharnierbolzen 16 vorgesehen, der in die U-förmige Aufnahme 14 eingreift. In der in Fig. 1 gezeigten, vollständig geschlossenen Stellung der Schiebetüre befindet sich der Scharnierbolzen 16 am Grund der U-förmigen Aufnahme 14. Er kann dort arretiert werden (in der Zeichnung nicht dargestellt).

Der Steuerhebel 11 weist einen Hebelarm 33 auf, der sich von dem Gelenk 12 nach innen erstreckt. Dabei knickt der Hebelarm 33 gegenüber der Verbindungslinie zwischen den Gelenken 13 und 12, also der Längserstreckung des Steuerhebels 11, nach innen ab. Im Ausführungsbeispiel knickt der Hebelarm 33 in einem annähernd rechten Winkel nach innen ab.

An dem Hebelarm 33 ist im Bereich von dessen Ende ein Führungsstift 34 vorgesehen, der in einer Führungsbahn 24 geführt ist. Die Führungsbahn 24 ist an der Schiebetüre 1 vorgesehen. Dementsprechend ist die Führungsbahn 24 also eine türfeste Führungsbahn. Sie verläuft relativ zur Führungsschiene 5 in Richtung von dem Scharnierbügel 7 weg nach außen geneigt. Die Führungsbahn 24 ist durchgehend linear ausgestaltet. Ihre Neigung ist über ihre gesamte Länge gleich groß.

In der vollständig geschlossenen Stellung der Schiebetüre 1, die in Fig. 1 gezeigt ist, liegt der Scharnierbolzen 16 in der U-förmigen Aufnahme 14, und zwar im Bereich von deren Ende. Der Führungsstift 34 befindet sich im Bereich des hinteren, inneren Endes der Führungsbahn 24. Der Steuerhebel 11 weist von dem Gelenk 13 nach vorne. Der Hebelarm 33 weist von dem Gelenk 12 nach innen.

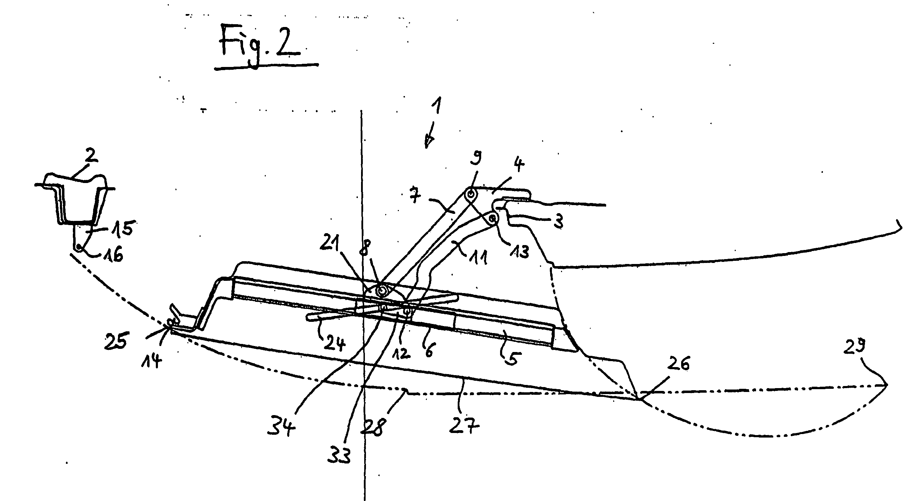

Im Verlauf der Öffnungsbewegung wird die Stellung nach Fig. 2 durchlaufen. Diese Öffnungsbewegung kann dadurch erzeugt werden, daß die Führungsschiene 5 relativ zu dem Gleitschlitten 6 nach hinten bewegt wird. An dem Gleitschlitten 6 kann ein Motor, insbesondere ein Elektromotor, zum Antrieb der Führungsschiene 5 relativ zum Gleitschlitten 6 vorhanden sein. Stattdessen oder zusätzlich kann ein Motor, insbesondere ein Elektromotor, zum Antrieb des Scharnierbügels 7 und/oder des Steuerhebels 11 vorhanden sein. Vorteilhaft ist es, wenn an dem Karosserieflansch 4 oder einem sonstigen Karosserieteil ein Motor zum Antrieb des Scharnierbügels 7 und/oder des Steuerhebels 11 vorhanden ist.

Die Öffnungsbewegung kann allerdings stattdessen oder zusätzlich auch von Hand erzeugt werden. Insbesondere kann die Führungsschiene 5 manuell nach hinten relativ zum Gleitschlitten 6 bewegt werden. Zu diesem Zweck können an der Schiebetüre 1 ein Griff oder mehrere Griffe vorgesehen sein, durch den oder die die Schiebetüre 1 und mit ihr die Führungsschiene 5 relativ zum Gleitschlitten 6 bewegt werden kann. Der Griff kann am inneren vorderen Ende der Schiebetüre 1 und/oder am äußeren vorderen Ende der Schiebetüre 1 und/oder am äußeren hinteren Ende der Schiebetüre 1 vorgesehen sein. Die Schiebetüre 1 kann durch einen Kraftangriff an jeder dieser drei Stellen geöffnet und auch wieder geschlossen werden.

Ohne den Führungsstift 34 könnte der Gleitschlitten 6 auf der Führungsschiene 5 frei verschoben werden. Der in der Führungsbahn 24 geführte Führungsstift 34 verhindert diese freie Verschiebbarkeit und legt die relative Position des Gleitschlittens 6 gegenüber der Führungsschiene 5 und damit gegenüber der Schiebetüre 1 fest. Dies erfolgt in den Abschnitten der Führungsbahn 24, die gegenüber der Führungsschiene 5 eine von Null verschiedene Neigung aufweisen, die also nicht parallel zur Führungsschiene 5 verlaufen. Die Führungsbahn 24 weist auf ihrer gesamten Länge dieselbe von Null verschiedene Neigung gegenüber der Führungsschiene 5 auf.

Wenn die Führungsschiene 5 motorisch und/oder manuell relativ zum Gleitschlitten 6 nach hinten bewegt wird, bewegt sich der in der Führungsbahn 24 geführte Führungsstift 34 relativ zur Führungsschiene 5 und zum Gleitschlitten 6 nach außen, wodurch der Steuerhebel 11 entgegen dem Uhrzeigersinn um das Gelenk 12 gedreht wird. Hierdurch wird der Steuerhebel 11 entgegen dem Uhrzeigersinn um das Gelenk 13 an dem Karosserieflansch 4 verschwenkt. Durch die Verschwenkung des Steuerhebels 11 wird auch der Scharnierbügel 7 entgegen dem Uhrzeigersinn um das Gelenk 9 verschwenkt. Die Gelenkplatte 21 des Gleitschlittens 6 wird durch die Verschwenkung des Scharnierbügels 7 um das Gelenk 9 ebenfalls zwangsgeführt, da sie mit dem Scharnierbügel 7, dem Steuerhebel 11 und dem Karosserieflansch 4 - wie ausgeführt - ein Mehrgelenk bildet.

Die Antriebsbewegung für die Öffnung der Schiebetüre 1 kann allerdings auch auf andere Weise eingeleitet werden, insbesondere durch einen motorischen und/oder manuellen Antrieb des Scharnierbügels 7 und/oder des Steuerhebels 11 um eines oder mehrere der Gelenke 9, 8, 13, 12.

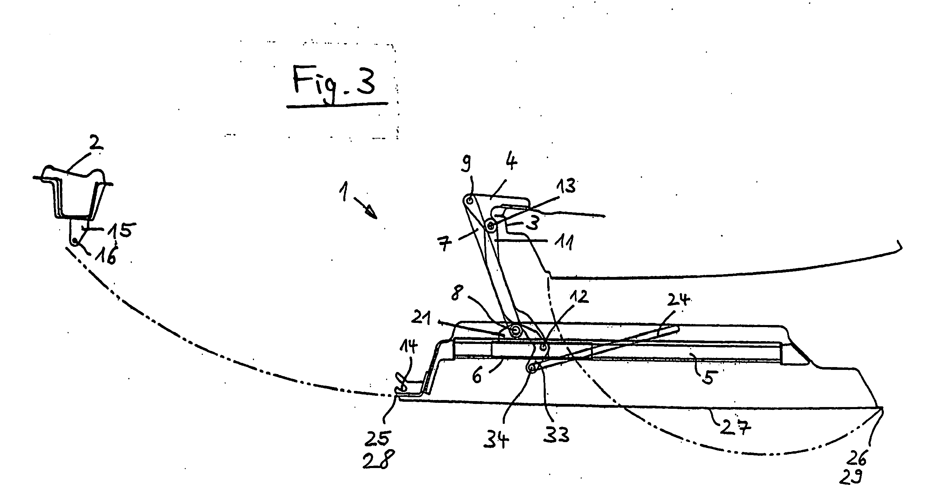

Die vollständig geöffnete Stellung der Schiebetüre 1 ist in Fig. 3 dargestellt. Der Hebelarm 33 wurde entgegen dem Uhrzeigersinn verschwenkt. Im Ausführungsbeispiel wurde der Hebelarm 33 um etwas mehr als 90° entgegen dem Uhrzeigersinn verschwenkt. Der Führungsstift 34 hat das vordere, geschlossene Ende der Führungsbahn 24 erreicht. Der Steuerhebel 11 und der Scharnierbügel 7 wurden um einen Winkel von etwa 120° entgegen dem Uhrzeigersinn um die Gelenke 13 und 9 verschwenkt.

Wenn die Schiebetüre 1 geschlossen werden soll, werden die beschriebenen Stellungen in umgekehrter Reihenfolge durchlaufen. Die Schließbewegung der Schiebetüre 1 kann dadurch bewirkt werden, daß die Führungsschiene 5 motorisch und/oder manuell relativ zum Gleitschlitten 6 nach vorne bewegt wird. Die Relativbewegung der Führungsschiene 5 wird durch die Führungsbahn 24 auf den Führungsstift 34 übertragen und von dort über den Hebelarm 33 in das beschriebene Mehrgelenk eingeleitet. Es ist allerdings auch möglich, die Schließbewegung in einer Weise einzuleiten, wie sie für die Öffnungsbewegung beschrieben wurde.

In Fig. 1, 2 und 3 sind die Wege des vorderen Endes 25 und des hinteren Endes 26 des äußeren Türblechs 27 eingezeichnet. Das vordere Ende 25 des äußeren Türblechs 27 bewegt sich zunächst in einem Winkel von etwa 30° gegenüber der Fahrzeug-Längsachse nach hinten und außen: Der Neigungswinkel der U-förmigen Aufnahme 14 entspricht diesem Winkel. Es beschreibt anschließend einen Bogen mit einem großen Radius, dessen Ende 28 eine parallel zur Fahrzeug-Längsachse verlaufende Tangente aufweist. Das hintere Ende 26 des äußeren Türblechs 27 bewegt sich zunächst annähernd rechtwinkelig von der Karosserie weg und beschreibt dann einen enger werdenden Bogen bis zu einem Endpunkt 29, der im wesentlichen denselben Abstand von der Karosserie des Fahrzeugs aufweist wie der Endpunkt 28 des vorderen Endes 25.

Es ist möglich, die Schiebetüre durch die Einleitung einer einzigen Bewegung zu öffnen und zu schließen. Insbesondere kann die Schiebetüre durch eine Bewegung der Führungsschiene 5 relativ zu dem Gleitschlitten 6 geöffnet und geschlossen werden. Es ist allerdings auch möglich, die Öffnungsbewegung und Schließbewegung der Schiebetüre auf andere Weise zu erzeugen und einzuleiten, wie oben beschrieben.

Durch die Ausführungsform nach Fig. 1 bis 3 wird eine Schiebetüre realisiert, deren bewegliche Teile in einer Richtung quer zur Fahrzeug-Längsachse nur sehr wenig Platz benötigen. Die maximale Breite dieser beweglichen Teile wird vom Abstand zwischen der Lage des Führungsstifts 34 in der Fig. 1 und der Lage des Führungsstifts 34 in der Fig. 3 bestimmt.

Es ist möglich, daß die Führungsbahn 24 an ihrem hinteren, inneren Ende einen gekrümmten Abschnitt aufweist, dessen Neigung gegenüber der Führungsschiene 5 größer ist als der lineare Bereich (in der Zeichnung nicht dargestellt). Hierdurch verläuft die Öffnungsbewegung des hinteren Endes 26 des äußeren Türblechs 27 aus der geschlossenen Stellung gemäß Fig. 1 in einem rechten Winkel, also noch steiler als bei Fig. 1. Durch die Gestaltung der Neigung der Führungsbahn kann das Ausschwenkverhalten der Schiebetüre gesteuert werden.

Vorteilhaft ist es, wenn der Führungsstift 34 während des gesamten Bewegungsablaufs auf der dem Karosserieflansch 4 bzw. den Gelenken 9, 13 abgewandten Seite einer gedachten Linie 35 liegt, die durch das Gelenk 12 verläuft, und zwar senkrecht zur Verbindungslinie zwischen den Gelenken 13, 12 des Steuerhebels 11. In Fig. 1 ist diese Linie 35 beispielhaft eingezeichnet. Dadurch, daß der Führungsstift 34 während des gesamten Bewegungsablaufs vor dieser Linie 35 liegt, wird eine "Übertotpunktlage" vermieden, die die Öffnungsbewegung und/oder Schließbewegung der Schiebetüre behindern oder unmöglich machen könnte.

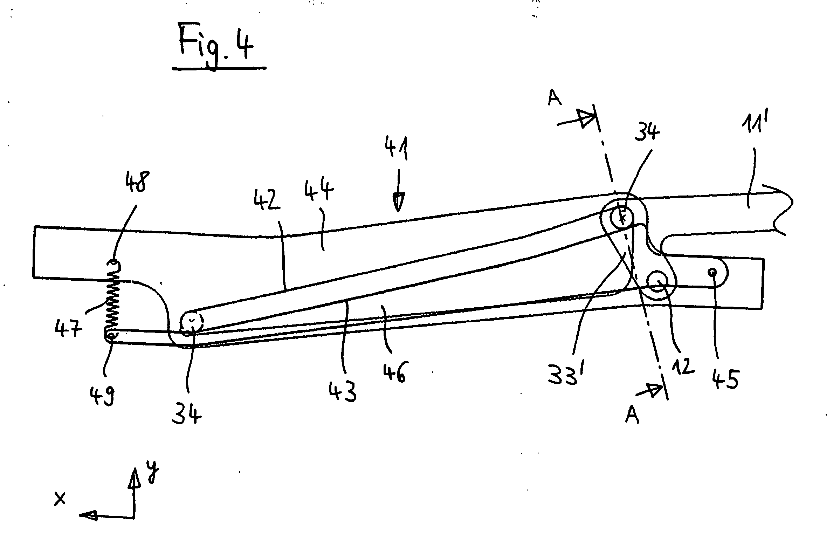

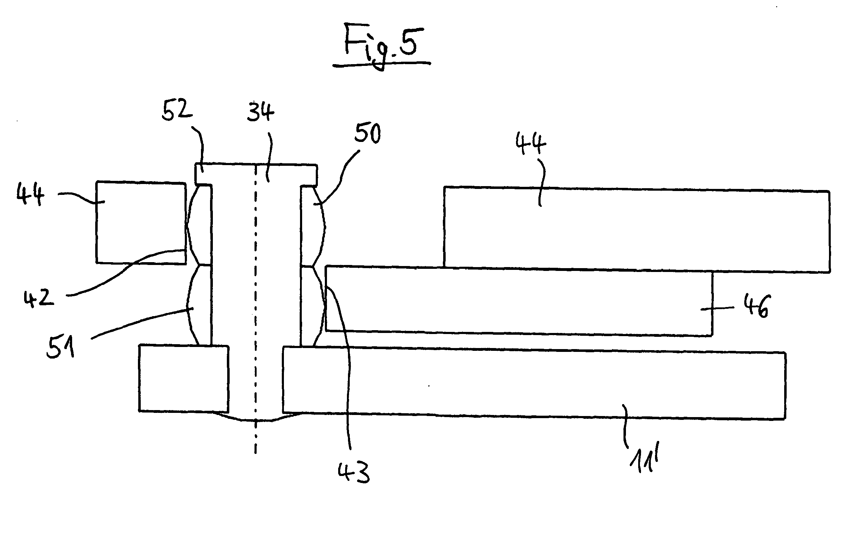

Fig. 4 und 5 zeigen eine erfindungsgemäße Führung 41, die abweichend von der Führungsbahn 24 der Ausführungsform nach den Fig. 1 bis 3 ausgebildet ist. Die Führung 41 umfaßt eine erste Führungsbahn 42 und eine zweite Führungsbahn 43, die gegenüber der ersten Führungsbahn 42 elastisch vorgespannt ist. Die erste Führungsbahn 42 ist mit der Schiebetüre verbunden. Sie ist an einem ersten Führungsbahnteil 44 vorgesehen. Das erste Führungsbahnteil 44 ist an der Schiebetüre befestigt. Es umfaßt die erste Führungsbahn 42 und eine Schwenkachse 45 für die zweite Führungsbahn 43. Die zweite Führungsbahn 43 ist an einem zweiten Führungsbahnteil 46 vorgesehen. Das zweite Führungsbahnteil 46 ist um die Schwenkachse 45 verschwenkbar gelagert.

Die zweite Führungsbahn 43 ist gegenüber der ersten Führungsbahn 42 durch die Zugfeder 47 elastisch vorgespannt. Ein Ende der Zugfeder 47 ist an einem Befestigungspunkt 48 am ersten Führungsbahnteil 44 befestigt, das andere Ende der Zugfeder 47 ist an einem Befestigungspunkt 49 am zweiten Führungsbahnteil 46 befestigt. Der Befestigungspunkt 49 liegt an dem der Schwenkachse 45 abgewandten Ende des zweiten Führungsbahnteils 46. Die Befestigungspunkte 48, 49 liegen weiter von der Schwenkachse 45 entfernt als die dieser Schwenkachse 45 abgewandten Enden der Führungsbahnen 42, 43. Anstelle der Zugfeder 47 könnte bei einer entsprechend abgewandelten Ausgestaltung der Führungsbahnteile 44, 46 auch eine Druckfeder verwendet werden.

In Fig. 4 ist die Fahrzeuglängsrichtung mit x bezeichnet, wobei der zugehörige Pfeil in Richtung nach vorne zeigt. Die Richtung nach innen ist in Fig. 4 mit y bezeichnet. Die Führung 41 wird von der ersten Führungsbahn 42 und der zweiten Führungsbahn 43 gebildet. Wie aus Fig. 4 ersichtlich verläuft die Führung 41 in Richtung nach vorne nach außen. Sie weist in ihrem hinteren Bereich eine stärkere Neigung nach außen auf als in ihrem vorderen Bereich. Sie könnte allerdings auch durchgehend linear ausgestaltet sein.

In der Führung 41 ist der Führungsstift 34 geführt. Der Führungsstift 34 ist an dem Steuerhebel 11' vorgesehen. Der Steuerhebel 11' ist an dem Gleitschlitten 6 um das Gelenk 12 drehbar gelagert. Im Unterschied zur Ausführungsform nach Fig. 1 bis 3 weist der Steuerhebel 11' bei der Ausführungsform nach Fig. 4 und 5 einen Hebelarm 33' auf, der sich von dem Führungsstift 34 nach außen erstreckt. Dabei knickt der Hebelarm 33' gegenüber der Verbindungslinie zwischen dem Gelenk 13 und dem Führungsstift 34, also der Längserstreckung des Steuerhebels 11', nach außen ab. Die Kinematik des Steuerhebels 11', des Gelenks 12 und des Führungsstifts 34 der Ausführungsform nach Fig. 4 und 5 ist jedoch im wesentlichen dieselbe wie die Kinematik des Steuerhebels 11, des Gelenks 12 und des Führungsstifts 34 der Ausführungsform nach Fig. 1 bis 3.

Wie aus Fig. 5 ersichtlich sind an dem Führungsstift 34 zwei Laufrollen vorgesehen, nämlich eine obere Laufrolle 50 und eine untere Laufrolle 51. Die Laufrollen 50, 51 sind drehbar an dem Führungsstift 34 gelagert. Zur Begrenzung der axialen Bewegung der oberen Laufrolle 50 weist der Führungsstift 34 an seinem oberen Ende einen im Durchmesser größeren Kopf 52 auf. An seinem unteren Ende ist der Führungsstift 34 an dem Steuerhebel 11' des Mehrgelenks befestigt. Der Steuerhebel 11' bildet einen unteren Anschlag für die untere Laufrolle 51.

Die obere Laufrolle 50 ist der ersten Führungsbahn 42 zugeordnet. Die untere Laufrolle 51 ist der unteren Führungsbahn 43 zugeordnet. Dementsprechend sind die Führungsbahnen 42, 43 wie die Laufrollen 50, 51 übereinander angeordnet. Die Laufrollen 50, 51 sind ferner ballig ausgestaltet. Sie weisen also ein Profil auf, das nach außen konvex gekrümmt ist. Insbesondere handelt es sich um ein teilkugelförmiges Profil.

Bei geschlossener Schiebetüre befindet sich der Führungsstift 34 mit den Laufrollen 50, 51 am hinteren Ende der Führungsbahn 12. Während des Öffnungsvorgangs durchläuft der Führungsstift 34 die Führung 41 in Richtung nach vorne. Während dieser Öffnungsbewegung der Schiebetüre stützt sich die obere Laufrolle 50 an der ersten Führungsbahn 42 ab. Die erste Führungsbahn 42 nimmt die von der oberen Laufrolle 50 ausgeübte Kraft auf. Bei vollständig geöffneter Schiebetüre befindet sich der Führungsstift 34 mit den Laufrollen 50, 51 am vorderen Ende der Führung 41.

Wenn die Schiebetüre anschließend geschlossen wird, durchläuft der Führungsstift 34 mit den Laufrollen 50, 51 den umgekehrten Weg. Er bewegt sich in der Führung 41 nach hinten. Während dieser Schließbewegung stützt sich die untere Laufrolle 51 an der zweiten Führungsbahn 43 ab. Die von der unteren Laufrolle 51 des Führungsstifts 34 ausgeübte Kraft wird von der zweiten Führungsbahn 43 aufgenommen. Die Stärke der Zugfeder 47 ist dabei so groß bemessen, daß die obere Laufrolle 50 während dieser Schließbewegung nicht von der ersten Führungsbahn 42 abhebt. Auf diese Weise bewegt sich der Führungsstift 34 mit den Laufrollen 50, 51 spielfrei in der von der ersten Führungsbahn 42 und der zweiten Führungsbahn 43 gebildeten Führung 41.

Bei einer abgewandelten Ausführungsform, die in der Zeichnung nicht dargestellt ist, ist das zweite Führungsbahnteil 46 an der zweiten Führungsbahn 43 nicht schwenkbar gelagert. An der Stelle der Schwenkachse 45 ist vielmehr eine Linearführung vorgesehen, und auch im Bereich der Zugfeder 47 ist eine weitere Linearführung vorgesehen. Die Linearführungen verlaufen im wesentlichen in Richtung von außen nach innen. Beide Linearführungen sind federbelastet.

## Patentansprüche

1. Schiebetüre für ein Fahrzeug mit einer Führungsschiene (5), mit einem Gleitschlitten (6), der an der Führungsschiene (5) längsverschieblich gelagert ist und der durch ein Mehrgelenk (7, 11, 4) mit der Fahrzeugkarosserie verbindbar ist, und mit einem Führungsstift (34), der an einer an der Schiebetüre vorgesehenen Führung (41) geführt ist,
**dadurch gekennzeichnet,**
**daß** die Führung (41) eine erste Führungsbahn (42) und eine zweite Führungsbahn (43) umfaßt, die gegenüber der ersten Führungsbahn (42) elastisch vorgespannt (47) ist.

2. Schiebetüre nach Anspruch 1, **dadurch gekennzeichnet, daß** die zweite Führungsbahn (43) durch eine Feder (47) vorgespannt ist.

3. Schiebetüre nach Anspruch 1 oder 2, **dadurch gekennzeichnet, daß** die zweite Führungsbahn (43) gegenüber der ersten Führungsbahn (42) schwenkbar (45) gelagert ist.

4. Schiebetüre nach einem der vorhergehenden Ansprüche, **dadurch gekennzeichnet, daß** die erste Führungsbahn (42) und die zweite Führungsbahn (43) übereinander angeordnet sind.

5. Schiebetüre nach einem der vorhergehenden Ansprüche, **dadurch gekennzeichnet, daß** an dem Führungsstift (34) zwei Laufrollen (50, 51) vorgesehen sind.

6. Schiebetüre nach Anspruch 5, **dadurch gekennzeichnet, daß** die Laufrollen (50, 51) ballig ausgestaltet sind.

7. Fahrzeug, insbesondere Kraftfahrzeug, **gekennzeichnet durch** eine oder mehrere Schiebetüren nach einem der Ansprüche 1 bis 6.

## Claims

1. A sliding door for a vehicle comprising a guide track (5), having a sliding carriage (6) which is longitudinally displaceably supported at the guide rail (5) and which can be connected by a multijoint (7, 11, 4) to the vehicle body and having a guide pin (34) which is guided at a guide (41) provided at the sliding door,
**characterized in that**
the guide (41) includes a first guide track (42) and a second guide track (43) which is elastically biased (47) with respect to the first guide track (42).

2. A sliding door in accordance with claim 1, **characterized in that** the second guide track (43) is biased by a spring (47).

3. A sliding door in accordance with either of claims 1 or 2, **characterized in that** the second guide track (43) is pivotably (45) journalled with respect to the first guide track (42).

4. A sliding door in accordance with one of the preceding claims, **characterized in that** the first guide track (42) and the second guide track (43) are arranged above one another.

5. A sliding door in accordance with one of the preceding claims, **characterized in that** two rollers (50, 51) are provided at the guide pin (34).

6. A sliding door in accordance with claim 5, **characterized in that** the rollers (50, 51) are configured as ball-shaped.

7. A vehicle, in particular a motor vehicle, **characterized by** one or more sliding doors in accordance with one of the claims 1 to 6.

## Revendications

1. Porte coulissante pour un véhicule avec un rail de guidage (5), avec un chariot coulissant (6) qui est logé d'une manière déplaçable longitudinalement au rail de guidage (5) et qui peut être relié par une articulation multiple (7, 11, 4) à la carrosserie du véhicule, et avec une tige de guidage (34) qui est guidée à un guidage (41) prévu à la porte coulissante,
**caractérisée en ce que** le guidage (41) comprend une première voie de guidage (42) et une deuxième voie de guidage (43) qui est précontrainte élastiquement (47) par rapport à la première voie de guidage (42).

2. Porte coulissante selon la revendication 1, **caractérisée en ce que** la deuxième voie de guidage (43) est précontrainte par un ressort (47).

3. Porte coulissante selon la revendication 1 ou 2, **caractérisée en ce que** la deuxième voie de guidage (43) est logée d'une manière pivotante (45) relativement à la première voie de guidage (42).

4. Porte coulissante selon l'une des revendications précédentes, **caractérisée en ce que** la première voie de guidage (42) et la deuxième voie de guidage (43) sont disposées l'une au-dessus de l'autre.

5. Porte coulissante selon l'une des revendications précédentes, **caractérisée en ce que** sont prévus à la tige de guidage (34) deux galets de roulement (50, 51).

6. Porte coulissante selon la revendication 5, **caractérisée en ce que** les galets de roulement (50, 51) ont une configuration bombée.

7. Véhicule, en particulier véhicule à moteur, **caractérisé par** une ou plusieurs portes coulissantes selon l'une des revendications 1 à 6.
